# EUROPÄISCHE PATENTSCHRIFT

(11) **EP 3 427 977 B1**
(45) Veröffentlichungstag und Bekanntmachung des Hinweises auf die Patenterteilung: **29.01.2020**
(21) Anmeldenummer: 18167415.1
(22) Anmeldetag: 16.04.2018
(51) Int. Cl.: B60C 13/00

(54) **FAHRZEUGREIFEN MIT EINER SEITENWANDSCHRAFFUR**
VEHICLE TYRE WITH SIDE WALL HATCHING
PNEUMATIQUE DE VÉHICULE À PAROIS LATÉRALE HACHURÉE

(30) Priorität: 11.07.2017 DE 102017211818
(43) Veröffentlichungstag der Anmeldung: 16.01.2019
(73) Patentinhaber: Continental Reifen Deutschland GmbH, 30165 Hannover (DE)
(72) Erfinder: Rittweger, Stefan, 30826 Garbsen (DE)
(74) Vertreter: Finger, Karsten

(56) Entgegenhaltungen:
- DE-A1-102013 108 786
- JP-A- 2004 338 655

## Beschreibung

Die Erfindung betrifft einen Fahrzeugreifen mit einer Seitenwand mit einer Schraffurfläche mit einer Basisschraffur aus einer Vielzahl von geradlinig und parallel bzw. weitgehend parallel zueinander verlaufenden Erhebungen, wobei innerhalb der Basisschraffur örtlich begrenzte schraffierte Flächenelemente aus Abschnitten von Erhebungen der Basisschraffur gebildet sind.

Schraffurflächen in den Seitenwänden von Fahrzeugluftreifen haben vorrangig die Aufgabe, einen Kontrast zu vorhandenen glatten Flächenbereichen der Seitenwände zu schaffen. Darüber hinaus lassen sich mit schraffierten Flächen konstruktionsbedingte Unebenheiten in den Reifenseitenwänden kaschieren. Dabei sollen Schraffuren möglichst individuell gestaltet werden können. Erwünscht ist oft auch eine dreidimensionale Wirkung von Schaffurflächenelementen, da echte dreidimensionale Gestaltungen an Seitenwänden aus Gründen der Uniformity des Reifens nicht möglich sind.

Ein Fahrzeugreifen der eingangs genannten Art ist beispielsweise aus der DE 10 2017 108 786 A1 bekannt. Bei diesem Fahrzeugreifen werden durch ein mehrmaliges Ablenken von Abschnitten der Erhebungen der Basisschraffur in die Basisschraffur eingebettete Flächenelemente gebildet, die Mantelflächen geometrischer Körper sind, bzw. diese simulieren, beispielsweise Pyramidenflächen. Durch abgelenkte Abschnitte von Erhebungen einer Schraffur lässt sich eine Vielzahl von dreidimensionalen, die Reifenseitenwand dekorierenden Strukturen bzw. Körpern vortäuschen.

Der Erfindung liegt die Aufgabe zugrunde, mittels dieser Methode, daher aus Abschnitten der die Basisschraffur bildenden Erhebungen, auf besonders gut sichtbare Weise auch Schriftzeichen und Ziffern mit einer dreidimensionalen Wirkung auf einer Reifenseitenwand wiedergeben zu können.

Gelöst wird die gestellte Aufgabe erfindungsgemäß dadurch, dass aus Abschnitten der Erhebungen der Basisschraffur ein Flächenelement gebildet ist, welches ein Schriftzeichen oder eine Ziffer wiedergibt, wobei diese Abschnitte parallel zu den Erhebungen der Basisschraffur verlaufen und gegenüber diesen in Umfangsrichtung bis zum 1,5-Fachen ihres gegenseitigen Abstandes versetzt sind, wobei weitere Abschnitte der Erhebungen der Basisschraffur Flächenelemente bilden, die eine Umrandung oder eine Teilumrandung des Schriftzeichens oder der Ziffer wiedergeben, wobei in diesen Flächenelementen die Abschnitte der Erhebungen der Basisschraffur unter einem stumpfen Winkel zu den Erhebungen der Basisschraffur verlaufen

Gemäß der Erfindung "wiederholt" sich die Ausgestaltung der Basisschraffur daher in jenem Flächenelement, welches das Schriftzeichen oder die Ziffer wiedergibt. Gemeinsam mit den weiteren, eine Umrandung oder eine Teilumrandung dieses Flächenelementes bildenden Flächenelementen, in welchen die Abschnitte der Erhebungen unter stumpfen Winkeln von den Erhebungen in der Basisschraffur abgelenkt sind, wird insgesamt dem Schriftzeichen oder der Ziffer eine dreidimensionale Wirkung verliehen.

Bei einer bevorzugten Ausführungsform beträgt der stumpfe Winkel zwischen den Abschnitten in den eine Umrandung oder eine Teilumrandung des Schriftzeichens oder der Ziffer wiedergebenden Flächenelementen und den Erhebungen der Basisschraffur 100° bis 170°. Abschnitte in der Umrandung bzw. Teilumrandung, die unter einem Winkel in diesem Bereich zu den Erhebungen der Basisschraffur verlaufen, bewirken einen besonders gut sichtbaren dreidimensionalen Effekt.

Bei bestimmten Ziffern oder Schriftzeichen, beispielsweise dem Großbuchstaben D oder dem Großbuchstaben E, befindet sich zwischen den Bestandteilen des Schriftzeichens oder der Ziffer wiedergebenden Flächenelementen zumindest ein weiteres, aus Abschnitten der Erhebungen der Basisschraffur gebildetes Flächenelement, wobei diese Abschnitte parallel zu den Erhebungen der Basisschraffur verlaufen. Auch diese Ausgestaltung unterstützt eine einheitliche dreidimensionale Wirkung der Schriftzeichen bzw. Ziffern.

Darüber werden bei einer weiteren, bevorzugten Ausführungsform Schatteneffekte nachgebildet, indem im Bereich und entlang von äußeren Konturen der eine Umrandung oder eine Teilumrandung des Schriftzeichens oder der Ziffer bildenden weiteren Flächenelementen zwischen einander benachbarten Erhebungen der Basisschraffur oder zwischen einander benachbarten Abschnitten der Flächenelemente zusätzliche, in Draufsicht strichartig wirkende, vorzugsweise eine Länge von 1,0 mm bis 6,0 mm aufweisende Erhebungen ausgebildet sind.

Besonders einheitlich wirken die Schriftzeichen oder Ziffern, wenn die Erhebungen der Basisschraffur inklusive ihrer Abschnitte in den Flächenelementen übereinstimmende Abmessungen aufweisen. Diesbezüglich ist es auch vorteilhaft, wenn die Abschnitte in den Flächenelementen jeweils zumindest im Wesentlichen parallel zueinander verlaufen.

Besonders harmonisch wirkt die Ausgestaltung von Seitenwandschraffuren, in welchen aus mehreren, in Umfangsrichtung der Seitenwand aufeinander folgenden Schriftzeichen ein Schriftzug oder aus aufeinanderfolgenden Ziffern eine Ziffernfolge gebildet ist. Die Schriftzüge und Ziffernfolgen sind zudem besonders gut sichtbar.

Weitere Merkmale, Vorteile und Einzelheiten der Erfindung werden nun anhand der Zeichnung, die ein Ausführungsbeispiel darstellt, näher beschrieben. Dabei zeigen
Fig. 1 einen Umfangsabschnitt einer Seitenwand eines Fahrzeugreifens in Draufsicht mit einer Ausführungsform der Erfindung und
Fig. 2 einen vergrößerten Ausschnitt der Fig. 1.

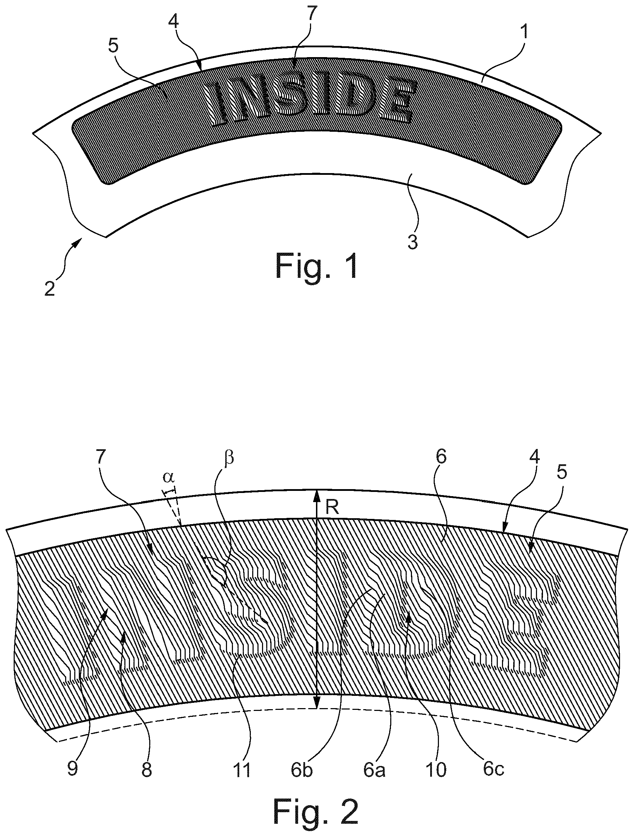

Fig. 1 und Fig. 2 zeigen in die Ebene projizierte Darstellungen von Ausschnitten einer Seitenwand 2 mit einer Schraffurfläche 4, wobei die leichte Wölbung der Seitenwand 2 unberücksichtigt bleibt. In Fig. 1 sind zusätzlich ein Laufstreifenauslauf 1 und ein äußeren Wulstbereich 3, welcher bei auf einer Felge montiertem Reifen durch die Felge zumindest teilweise abgedeckt ist, angedeutet.

Auf der Seitenwand 2 eines Fahrzeugluftreifens sind üblicherweise die vorgeschriebenen Angaben, wie Dimensionsangaben, Speedindex, Hersteller, Verwendungszweck (Sommer-/ Winterreifen) und dergleichen angegeben. Diese Angaben befinden sich meist auf glatten Flächenbereichen der Seitenwände. Es verbleibt jedoch einiges an Fläche auf den Seitenwänden, um Dekors oder dekorative Beschriftungen und dergleichen, die einerseits ein Kontrast zu den glatten Flächenbereichen in der Seitenwand sind und andererseits auch etwaige konstruktionsbedingte Unebenheiten an den Reifenseitenwänden kaschieren, anzubringen.

Die Schraffurfläche 4 setzt sich aus einer Vielzahl von im Querschnitt beispielsweise dreieckigen oder trapezförmigen Erhebungen 6 zusammen, die nebeneinander und parallel bzw. im Wesentlichen parallel zueinander und geradlinig verlaufen. Die Höhe dieser Erhebungen 6 beträgt vorzugsweise 0,2 mm bis 1,0 mm, bei PKW-Reifen üblicherweise in der Größenordnung von 0,3 mm, bei LKW-Reifen üblicherweise in der Größenordnung von 0,5 mm bis 0,8 mm. Innerhalb der Schraffurfläche 4 weisen sämtliche Erhebungen 6 vorzugsweise übereinstimmende Höhen auf. Vorzugsweise weisen die Erhebungen 6 keinen oder nur einen geringen, beispielsweise bis 0,3 mm betragenden gegenseitigen Abstand an ihrer Basis auf. Die Breite der Erhebungen 6 an ihrer Basis entspricht vorzugsweise ihrer Höhe, kann jedoch auch etwas größer oder kleiner sein als diese.

Die in Fig. 1 und Fig. 2 gezeigte Schraffurfläche 4 weist eine Basisschraffur 5 auf, innerhalb welcher Erhebungen 6 zur radialen Richtung R unter einem spitzen Winkel α verlaufen, welcher ≤ 45° ist und vorzugsweise 10° bis 35° beträgt. Dabei sind zum besseren Verständnis der Erfindung jene "Abschnitte" der Erhebungen 6, welche die Basisschraffur 5 bilden, nicht als Abschnitte, sondern als "Erhebungen 6 der Basisschraffur 5" bezeichnet.

In die Basisschraffur 5 ist durch abgelenkte Abschnitte 6a, 6b, 6c der Erhebungen 6 der Basisschraffur 5 zumindest ein Schriftzeichen 7 und/oder zumindest eine Ziffer eingebettet. Bei der dargestellten Ausführungsform bilden mehrere Schriftzeichen 7 den Schriftzug INSIDE. Jedes Schriftzeichen 7 setzt sich aus einem das jeweilige Schriftzeichen 7 wiedergebenden Flächenelement 8, äußeren Flächenelementen 9, welche eine das Schriftzeichen 7 zumindest teilweise wiedergebende Umrandung oder Teilumrandung bilden und ggf. zumindest einem weiteren Flächenelement 10 zusammen.

Die in den Flächenelementen 8 der Schriftzeichen 7 verlaufenden Abschnitte 6a der Erhebungen 6 erstrecken sich parallel zu den Erhebungen 6 der Basisschraffur 5. In den äußeren Flächenelementen 9 befinden sich die Abschnitte 6b, welche unter einem stumpfen Winkel β von 100° bis 170°, insbesondere 130° bis 150°, zu den Abschnitten 6a und den Erhebungen 6 der Basisschraffur 5 und unmittelbar an beide anschließend verlaufen. Die Abschnitte 6a im Flächenelement 8 sind daher gegenüber den Erhebungen 6 der Basisschraffur 5 in Umfangsrichtung der Seitenwand 2 und insbesondere bis zum 1,5-Fachen des gegenseitigen Abstandes der Erhebungen 6 der Basisschraffur 5 versetzt.

Je nach der Ausgestaltung des Schriftzeichens 7, beispielsweise beim Buchstaben D und beim Buchstaben E, sind zwischen Bestandteilen des Schriftzeichens 7, beim Buchstaben E zwischen den mittleren Balken und den beiden äußeren Balken des E, beim Buchstaben D in der Mitte, weitere Flächenelemente 10 vorhanden, in welchen sich die Abschnitte 6c befinden, welche parallel zu den Erhebungen 6 der Basisschraffur 5 verlaufen.

Auf diese Weise entsteht der Eindruck einer erhabenen, dreidimensionalen Ausgestaltung der Schriftzeichen 7, beim gezeigten Ausführungsbeispiel der Buchstaben des Wortes INSIDE. Der dreidimensionale Effekt wird bei der gezeigten Ausführung dadurch unterstützt, dass Schatten angedeutet sind, indem, Schatten simulierend, in entsprechenden Bereichen von äußeren Konturen der Schriftzeichen 7 zwischen einander benachbarten Erhebungen 6 der Basisschraffur 5 oder zwischen einander benachbarten Abschnitten 6b oder 6c und parallel zu den Erhebungen 6 der Basisschraffur 5 bzw. den Abschnitten 6b, 6c verlaufend zusätzliche, kurze, in Draufsicht strichartig wirkende, beispielsweise eine Länge von 1,0 mm bis 6,0 mm, insbesondere bis 3,0 mm, aufweisende Erhebungen 11 ausgebildet sind. Diese Erhebungen 11 können analog zu den Erhebungen 6 ausgebildet sein, können jedoch auch eine größere oder kleinere Höhe aufweisen und "sitzen" vorzugsweise auf den und zwischen den Seitenflächen benachbarter Erhebungen 6 bzw. ihrer Abschnitte 6a, 6b, 6c. Die Erhebungen 11 sind derart angeordnet, dass sie entlang von Außenkonturen Reihen von parallel zueinander verlaufenden Erhebungen 11 bilden.

### Bezugszeichenliste

- 1......................: Laufstreifenauslauf
- 2......................: Seitenwand
- 3......................: äußerer Wulstbereich
- 4......................: Schraffurfläche
- 5......................: Basisschraffur
- 6......................: Erhebung
- 6a, 6b, 6c.........: Abschnitt
- 7......................: Schriftzeichen
- 8, 9, 10............: Flächenelement
- 11....................: Erhebung
- α, β..................: Winkel
- R.....................: radiale Richtung

## Patentansprüche

1. Fahrzeugreifen mit einer Seitenwand (2) mit einer Schraffurfläche (4) mit einer Basisschraffur (5) mit einer Vielzahl von geradlinig und parallel bzw. weitgehend parallel zueinander verlaufenden Erhebungen (6), wobei innerhalb der Basisschraffur (5) örtlich begrenzte schraffierte Flächenelemente (8, 9, 10) aus Abschnitten (6a, 6b, 6c) der Erhebungen (6) der Basisschraffur (5) gebildet sind, **dadurch gekennzeichnet,**
**dass** aus Abschnitten (6a) der Erhebungen (6) der Basisschraffur (5) ein Flächenelement (8) gebildet ist, welches ein Schriftzeichen (7) oder eine Ziffer wiedergibt, wobei diese Abschnitte (6a) parallel zu den Erhebungen (6) der Basisschraffur (5) verlaufen und gegenüber diesen in Umfangsrichtung bis zum 1,5-Fachen ihres gegenseitigen Abstandes versetzt sind, wobei weitere Abschnitte (6b) der Erhebungen (6) der Basisschraffur (5) Flächenelemente (9) bilden, die eine Umrandung oder eine Teilumrandung des Schriftzeichens (7) oder der Ziffer wiedergeben, wobei in diesen Flächenelementen (9) die Abschnitte (6b) der Erhebungen (6) der Basisschraffur (5) unter einem stumpfen Winkel (ß) zu den Erhebungen (6) der Basisschraffur (5) verlaufen.

2. Fahrzeugreifen nach Anspruch 1, **dadurch gekennzeichnet, dass** der stumpfe Winkel (ß) zwischen den Abschnitten (6b) in den eine Umrandung oder eine Teilumrandung des Schriftzeichens (7) oder der Ziffer wiedergebenden Flächenelementen (9) und den Erhebungen (6) der Basisschraffur (5) 100° bis 170° beträgt.

3. Fahrzeugreifen nach Anspruch 1 oder 2, **dadurch gekennzeichnet, dass** zwischen Bestandteilen des ein Schriftzeichen (7) oder eine Ziffer wiedergebenden Flächenelementes (8, 9) zumindest ein weiteres, aus Abschnitten (6c) der Erhebungen (6) der Basisschraffur (5) gebildetes Flächenelement (10) vorhanden ist, wobei diese Abschnitte (6c) parallel zu den Erhebungen (6) der Basisschraffur (5) verlaufen.

4. Fahrzeugreifen nach einem der Ansprüche 1 bis 3, **dadurch gekennzeichnet, dass** im Bereich und entlang von äußeren Konturen der eine Umrandung oder eine Teilumrandung des Schriftzeichens oder der Ziffer bildenden Flächenelementen (9) zwischen einander benachbarten Erhebungen (6) der Basisschraffur oder zwischen einander benachbarten Abschnitten (6a, 6b, 6c) zusätzliche, in Draufsicht strichartig wirkende, vorzugsweise eine Länge von 1,0 mm bis 6,0 mm aufweisende Erhebungen (11) ausgebildet sind.

5. Fahrzeugreifen nach einem der Ansprüche 1 bis 4, **dadurch gekennzeichnet, dass** die Erhebungen (6) der Basisschraffur (5) inklusive ihrer Abschnitte (6a, 6b, 6c) in den Flächenelementen (8, 9, 10) übereinstimmende Abmessungen aufweisen.

6. Fahrzeugreifen nach einem der Ansprüche 1 bis 5, **dadurch gekennzeichnet, dass** die Abschnitte (6a, 6b, 6c) in den Flächenelementen (8, 9, 10) jeweils parallel zueinander verlaufen.

7. Fahrzeugreifen nach einem der Ansprüche 1 bis 6, **dadurch gekennzeichnet, dass** aus mehreren, in Umfangsrichtung der Seitenwand (2) aus aufeinanderfolgenden Schriftzeichen (7) ein Schriftzug oder aus aufeinanderfolgenden Ziffern eine Ziffernfolge gebildet ist

## Claims

1. Vehicle tyre having a side wall (2) with a hatched surface (4) with basic hatching (5) having a multiplicity of elevations (6) running rectilinearly and parallel or largely parallel to one another, wherein locally delimited hatched surface elements (8, 9, 10) made of sections (6a, 6b, 6c) of the elevations (6) of the basic hatching (5) are formed within the basic hatching (5),
**characterized in that**
a surface element (8) which reproduces a letter (7) or a number is formed from sections (6a) of the elevations (6) of the basic hatching (5), wherein these sections (6a) run parallel to the elevations (6) of the basic hatching (5) and are offset relative to the latter in the circumferential direction by up to 1.5 times their mutual spacing, wherein further sections (6b) of the elevations (6) of the basic hatching (5) form surface elements (9) which reproduce a border or a partial border of the letter (7) or the number, wherein, in these surface elements (9), the sections (6b) of the elevations (6) of the basic hatching (5) run at an oblique angle (β) to the elevations (6) of the basic hatching (5).

2. Vehicle tyre according to Claim 1, **characterized in that** the oblique angle (β) between the sections (6b) in the surface elements (9) reproducing a border or a partial border of the letter (7) or the number and the elevations (6) of the basic hatching (5) is 100° to 170°.

3. Vehicle tyre according to Claim 1 or 2, **characterized in that** between constituent parts of the surface element (8, 9) reproducing a letter (7) or a number, there is at least one further surface element (10) formed from sections (6c) of the elevations (6) of the basic hatching (5), wherein these sections (6c) run parallel to the elevations (6) of the basic hatching (5).

4. Vehicle tyre according to one of Claims 1 to 3, **characterized in that** in the region of and along outer contours of the surface elements (9) forming a border or a partial border of the letter or the number, between mutually adjacent elevations (6) of the basic hatching or between mutually adjacent sections (6a, 6b, 6c), additional elevations (11) which have a line-like effect in plan view and preferably have a length of 1.0 mm to 6.0 mm are formed.

5. Vehicle tyre according to one of Claims 1 to 4, **characterized in that** the elevations (6) of the basic hatching (5), including the sections (6a, 6b, 6c) thereof in the surface elements (8, 9, 10), have matching dimensions.

6. Vehicle tyre according to one of Claims 1 to 5, **characterized in that** the sections (6a, 6b, 6c) in the surface elements (8, 9, 10) each run parallel to one another.

7. Vehicle tyre according to one of Claims 1 to 6, **characterized in that** text is formed from multiple letters (7) following one another in the circumferential direction of the side wall (2), or a sequence of numbers is formed from numbers following one another.

## Revendications

1. Pneumatique de véhicule comprenant une paroi latérale (2) pourvue d'une surface hachurée (4) comportant une hachure de base (5) pourvue d'une multitude d'élévations (6) s'étendant de manière rectiligne et parallèle ou largement parallèlement les unes aux autres, des éléments de surface hachurée (8, 9, 10) délimités localement étant formées, à l'intérieur de la hachure de base (5), de portions (6a, 6b, 6c) des élévations (6) de la hachure de base (5), **caractérisé en ce qu'**un élément de surface (8), qui reproduit un caractère (7) ou un nombre, est formé à partir de portions (6a) des élévations (6) de la hachure de base (5), ces portions (6a) s'étendant parallèlement aux élévations (6) de la hachure de base (5) et étant décalées de celles-ci dans la direction circonférentielle jusqu'à 1,5 fois leur distance mutuelle, d'autres portions (6b) des élévations (6) de la hachure de base (5) formant des éléments de surface (9) qui reproduisent une bordure ou une partie de bordure du caractère (7) ou du nombre, les portions (6b) des élévations (6) de la hachure de base (5) s'étendant, dans ces éléments de surface (9), en formant un angle obtus (β) par rapport aux élévations (6) de la hachure de base (5).

2. Pneumatique de véhicule selon la revendication 1, **caractérisé en ce que** l'angle obtus (β), formé entre les portions (6b) dans les éléments de surface reproduisant une bordure ou une partie de bordure du caractère (7) ou du nombre (9) et dans les élévations (6) de la hachure de base (5), est dans la gamme allant de 100° à 170°.

3. Pneumatique de véhicule selon la revendication 1 ou 2, **caractérisé en ce qu'**au moins un autre élément de surface (10), formé de portions (6c) des élévations (6) de la hachure de base (5), est présent entre des composants de l'élément de surface (8, 9) reproduisant un caractère (7) ou un nombre, ces portions (6c) s'étendant parallèlement aux élévations (6) de la hachure de base (5).

4. Pneumatique de véhicule selon l'une des revendications 1 à 3, **caractérisé en ce que** des élévations supplémentaires (11), en forme de stries en vue de dessus et ayant de préférence une longueur de 1,0 mm à 6,0 mm, sont formées entre des élévations adjacentes (6) de la hachure de base ou entre des portions adjacentes (6a, 6b, 6c) dans la région et le long de contours extérieurs des éléments de surface (9) formant une bordure ou une partie de bordure du caractère ou du nombre.

5. Pneumatique de véhicule selon l'une des revendications 1 à 4, **caractérisé en ce que** les élévations (6) de la hachure de base (5) incluant leurs portions (6a, 6b, 6c) dans les éléments de surface (8, 9, 10) ont des dimensions correspondantes.

6. Pneumatique de véhicule selon l'une des revendications 1 à 5, **caractérisé en ce que** les portions (6a, 6b, 6c) des éléments de surface (8, 9, 10) s'étendent parallèlement entre elles.

7. Pneumatique de véhicule selon l'une des revendications 1 à 6, **caractérisé en ce qu'**une séquence de caractères est formée d'une pluralité de caractères successifs (7) dans la direction circonférentielle de la paroi latérale (2) ou une séquence de chiffres est formée de chiffres successifs.
